# EUROPÄISCHE PATENTSCHRIFT

(11) **EP 3 095 250 B1**
(45) Veröffentlichungstag und Bekanntmachung des Hinweises auf die Patenterteilung: **21.08.2019**
(21) Anmeldenummer: 14828040.7
(22) Anmeldetag: 30.12.2014
(51) Int. Cl.: H04Q 9/00, B60L 3/00, B60L 3/12, B60L 58/10

(54) **KOMMUNIKATIONSSCHNITTSTELLE FÜR EINE DRAHTLOSE ÜBERTRAGUNG VON DATEN ZWISCHEN EINEM BATTERIESYSTEM UND EINER WEITEREN EINRICHTUNG**
COMMUNICATIONS INTERFACE FOR THE WIRELESS TRANSMISSION OF DATA BETWEEN A BATTERY SYSTEM AND A FURTHER DEVICE
INTERFACE DE COMMUNICATION POUR LA TRANSMISSION SANS FIL DE DONNÉES ENTRE UN SYSTÈME DE BATTERIES ET UN AUTRE DISPOSITIF

(30) Priorität: 17.01.2014 DE 102014200822
(43) Veröffentlichungstag der Anmeldung: 23.11.2016
(73) Patentinhaber: Robert Bosch GmbH, 70442 Stuttgart (DE)
(72) Erfinder: SCHWEINBENZ, Jochen, 70469 Stuttgart (DE); KOHLBERGER, Markus, 70174 Stuttgart (DE); LIEPOLD, Dirk, 70184 Stuttgart (DE)
(86) Internationale Anmeldenummer: PCT/EP2014/079403
(87) Internationale Veröffentlichungsnummer: WO 2015/106947

(56) Entgegenhaltungen:
- WO-A1-2012/084524
- WO-A2-2013/014914
- DE-A1-102009 035 472

## Beschreibung

Die Erfindung betrifft eine Kommunikationsschnittstelle zur Ermöglichung einer drahtlosen Übertragung von Daten zwischen einem Batteriesystem und wenigstens einer weiteren Einrichtung.

### Stand der Technik

Batteriesysteme sind insbesondere für die Elektromobilität von großer Bedeutung. Insbesondere in Hybrid-, Plug-In-Hybrid- oder Elektrofahrzeugen eingesetzte Batteriesysteme umfassen in der Regel eine Mehrzahl von elektrisch miteinander verschalteten Batteriezellen. Aufgrund der vergleichsweise hohen Energiedichte von Lithium-Ionen-Zellen werden diese bevorzugt als nachladbare Batteriezellen in Batteriesystemen eingesetzt. Da Batteriezellen nur in einem bestimmten Temperaturbereich betrieben werden können, insbesondere um einer vorzeitigen Alterung der Batteriezellen vorzubeugen und/oder um Schäden an den Batteriezellen zu vermeiden, ist es erforderlich, eine Mehrzahl von Betriebsparametern eines Batteriesystems zu überwachen und/oder zu regeln.

Hierzu weisen Batteriesysteme üblicherweise ein Batteriemanagementsystem auf, welches insbesondere ausgebildet ist, Messwerte hinsichtlich Batteriezellspannungen und/oder Batteriezelltemperaturen der Batteriezellen zu erfassen und auszuwerten, insbesondere ob diese innerhalb bestimmter Sollwerte liegen. Darüber hinaus kann ein Batteriesystem zur Temperierung der Batteriezellen ein Kühlsystem umfassen, welches dazu beiträgt, dass die Batteriezellen in dem vorgegebenen Solltemperaturbereich betrieben werden können. Des Weiteren ist es bekannt, das Batteriemanagementsystem oder Komponenten des Batteriemanagementsystems derart auszubilden, dass diese ein sogenanntes Cell-Balancing durchführen können. Ferner wird mittels eines Batteriemanagementsystems insbesondere bei einem Nachladen der Batteriezellen überwacht, dass die Batteriezellen nicht überladen werden und während des Ladevorgangs nicht überhitzen. Ferner werden von dem Batteriemanagementsystem insbesondere Betriebsparameter erfasst und ausgewertet sowie gegebenenfalls an weitere Steuergeräteeinheiten weitergeleitet, beispielsweise an eine Steuergeräteeinheit eines Fahrzeugs.

Eine Vielzahl dieser Parameter wird daher während des Betriebs eines Batteriesystems, insbesondere während des Betriebs eines Batteriesystems in einem Fahrzeug, erfasst und abgespeichert, insbesondere Betriebsparameter, wie der Ladezustand der Batteriezellen des Batteriesystems oder die Batteriezelltemperaturen. Ferner werden beim Betrieb des Batteriesystems auftretende Fehler- oder Warnmeldungen von dem Batteriemanagementsystem gespeichert. Unter Nutzung solcher Daten ist insbesondere eine Bewertung des Zustand des Batteriesystems, insbesondere der Batteriezellen und/oder der Batteriemodule des Batteriesystems, möglich.

Bei Wartungs- und/oder Reparaturarbeiten an in Fahrzeugen eingesetzten Batteriesystemen werden diese Informationen daher üblicherweise über das zentrale Steuergerät des Fahrzeugs ausgelesen und anschließend ausgewertet, beispielsweise um zu ermitteln, ob ein Austausch von Batteriezellen erforderlich ist. Dazu wird üblicherweise ein Diagnosegerät über ein Übertragungskabel mit dem Datenübertragungsanschluss des zentralen Steuergeräts verbunden. Anschließend kann das Wartungspersonal anhand dieser Daten eine Bewertung des Batteriesystemzustands erstellen.

Aus der Druckschrift DE 20 2010 013 724 U1 ist ein Batteriesystem für Elektrofahrzeuge bekannt. Zur Übertragung von Daten von dem Batteriesystem an ein Ladegerät offenbart diese Druckschrift, dass das Batteriesystem ein Funkmodul aufweisen kann, sodass die Datenübertragung von dem Batteriesystem an die Ladeeinrichtung per Funk erfolgen kann.

Die Druckschrift DE 10 2009 035 472 A1 offenbart eine Vorrichtung zum Auslesen des Ladezustands einer Batterie in einem nicht angeschlossenen Zustand mit einer Einrichtung zur kabellosen Übermittlung des erfassten Ladezustands.

Die Druckschrift WO 2013/014914 A2 offenbart einen Adapter für ein batteriebetriebenes Elektrowerkzeug, das einen Controller aufweist, der eingerichtet ist, mit einem Controller des Elektrowerkzeugs und einem Controller der Batterie bidirektional zu kommunizieren. Mittels des Adapters ist eine kabellose Kommunikation mit einem externen Gerät ausführbar.

Vor diesem Hintergrund ist es eine Aufgabe der Erfindung, eine Möglichkeit zur Bereitstellung einer Kommunikation zwischen dem Batteriesystem und einer externen weiteren Einrichtung, insbesondere einem Diagnosegerät bereitzustellen, sodass insbesondere für Wartungs- und Reparaturarbeiten Daten zwischen einem Batteriesystem und einer externen Einrichtung übertragen werden können. Dabei soll insbesondere eine für ein Wartungspersonal gefahrlose Übertragung von Daten zwischen einem Batteriesystem und einer externen Einrichtung ermöglicht werden. Fehlerquellen im Zusammenhang mit der Datenübertragung sollen vorteilhafterweise reduziert werden.

### Offenbarung der Erfindung

Zur Lösung der Aufgabe wird eine Kommunikationsschnittstelle nach Anspruch 1 vorgeschlagen.

Durch die erfindungsgemäße Kommunikationsschnittstelle ist vorteilhafterweise eine direkte Kommunikation zwischen einem Diagnosegerät und dem Batteriesystem insbesondere ohne den Umweg über das zentrale Steuergerät eines Fahrzeugs ermöglicht. Dadurch wird die Übertragung von Daten zwischen einem Batteriesystem und dem Diagnosegerät vorteilhafterweise auch nicht durch Meldungen anderer Fahrzeugkomponenten, die an das zentrale Steuergerät gesendet werden, gestört, was vorteilhafterweise zudem die Übermittlungsrate der gewünschten Daten erhöht.

Zur Übertragung von Daten zwischen einem Batteriesystem und einer weiteren Einrichtung, insbesondere einem Diagnosegerät, braucht dabei vorteilhafterweise lediglich die Kommunikationsschnittstelle an das Batteriesystem beziehungsweise den Datenübertragungsanschluss des Batteriesystems angeschlossen zu werden. Eine leitungsgebundene Verbindung zwischen dem Batteriesystem und einem Diagnosegerät braucht dabei vorteilhafterweise nicht hergestellt zu werden. Auf diese Weise ist vorteilhafterweise ein gefahrloses schnelles Auslesen von Daten aus dem Batteriesystem ermöglicht. Die Nutzung einer erfindungsgemäßen Kommunikationsschnittstelle reduziert dabei vorteilhafterweise für ein Wartungspersonal die Gefahren, die von einem Umgang mit einem solchen Batteriesystem ausgehen können, insbesondere Gefahren durch elektrische Schläge beispielsweise bei einem defekten Übertragungskabel.

Vorteilhafterweise kann ein Wartungspersonal unter Nutzung der erfindungsgemäßen Kommunikationsschnittstelle aus einer sicheren Entfernung die Zustandsdaten des Batteriesystems, beispielsweise Fehlermeldungen oder den Ladezustand, auslesen. Durch die erfindungsgemäße Kommunikationsschnittstelle ist es dabei vorteilhafterweise möglich, den Zustand des Batteriesystems zu beurteilen, ohne dass das Wartungspersonal unmittelbaren Gefahren durch das Batteriesystem, wie insbesondere Stromschlägen, ausgesetzt ist. Insbesondere kann vorgesehen sein, dass der Datenübertragungsanschluss des Batteriesystems über eine entsprechende Leitung an einer einfach zugänglichen Stelle eines Fahrzeugs montiert ist, beispielsweise im Fahrzeuginnenraum oder im Kofferraum eines Fahrzeugs. Gemäß einer vorteilhaften Ausgestaltungsvariante der Erfindung ist vorgesehen, dass die Kommunikationsschnittstelle mittels eines Anschlusskabels an dem Datenübertragungsanschluss des Batteriesystems angeschlossen wird.

Darüber hinaus ist vorteilhafterweise durch die drahtlose Übertragung von Daten der Aktionsradius des Wartungspersonals erhöht, insbesondere da es durch die drahtlose Datenübertragung sogar ermöglicht ist, dass das zu wartende Batteriesystem und das Diagnosegerät räumlich voneinander getrennt sind. Des Weiteren werden vorteilhafterweise Fehler bei der Datenübertragung zwischen einem Batteriesystem und einer weiteren Einrichtung durch die Nutzung einer erfindungsgemäßen Kommunikationsschnittstelle reduziert, da Fehler durch beschädigte Messleitungen, zu kurze Kabel oder ungünstige Arbeitsbedingungen vorteilhafterweise vermieden werden.

Vorteilhafterweise kann zudem mittels einer erfindungsgemäßen Kommunikationsschnittstelle selbst bei Schadensfällen, beispielsweise nach einem Unfall eines ein Batteriesystem aufweisenden Elektrofahrzeugs, nach Anbinden einer erfindungsgemäßen Kommunikationsschnittstelle an das Batteriesystem eine für den Nutzer gefahrlose Datenübertragung zwischen dem Batteriesystem und der weiteren Einrichtung erfolgen. Insbesondere können mittels einer erfindungsgemäßen Kommunikationsschnittstelle Daten zur Steuerung des Batteriesystems drahtlos an das Batteriesystem übertragen werden, insbesondere um quasi ferngesteuert ein Entladen der Batteriezellen des Batteriesystems zu steuern und somit die von einem havarierten Fahrzeug im Rahmen der Bergung ausgehende Gefahr durch elektrische Schläge zu senken.

Dadurch, dass die Datenübertragung zwischen dem Batteriesystem und einer weiteren externen Einrichtung, insbesondere einem Diagnosegerät, über die erfindungsgemäße Kommunikationsschnittstelle erfolgt, und nicht über ein seitens des Batteriesystems bereitgestelltes Funkmodul, ist vorteilhafterweise sichergestellt, dass die externe Einheit in jedem Fall über die Kommunikationsschnittstelle mit dem Batteriesystem kommunizieren kann, da der gleiche drahtlose Übertragungsstandart unterstützt wird. Das Batteriesystem bedarf dabei vorteilhafterweise keiner besonderen Ausbildung. Insbesondere ist es nicht erforderlich, dass das Batteriesystem mit einer eine drahtlose Datenübertragung ermöglichenden Kommunikationsschnittstelle ausgestattet ist, wodurch vorteilhafterweise Kosten im Zusammenhang mit der Herstellung eines Batteriesystem gesenkt sind.

Eine besonders vorteilhafte Ausgestaltung der Erfindung sieht vor, dass die Kommunikationsschnittstelle eine Steuergeräteeinheit umfasst, wobei die Steuergeräteeinheit ausgebildet ist, die Datenübertragung des Batteriesystems, insbesondere die interne Datenübertragung des Batteriesystems zumindest teilweise zu steuern, wenn die Kommunikationsschnittstelle an den Datenübertragungsanschluss des Batteriesystems angeschlossen ist. Wie bereits eingangs ausgeführt, findet insbesondere eine batteriesysteminterne Datenübertragung zwischen den Batteriezellen des Batteriesystems und einer Steuergeräteeinheit des Batteriemanagementsystems, insbesondere zwischen den Batteriezellen und der sogenannten Battery Control Unit (BCU), statt. Bei einer solchen internen Datenübertragung werden dabei insbesondere Zellparameter an die BCU übertragen. Darüber hinaus kann ein sogenanntes Cell-Balancing ausgeführt werden. Wenn das Batteriemanagementsystem beziehungsweise die Battery Control Unit des Batteriesystems einen Defekt aufweist, ist dies nicht ohne weiteres zu erkennen. Durch die erfindungsgemäße Ausgestaltung der Kommunikationsschnittstelle, wobei die Steuergeräteeinheit die Datenübertragung zumindest teilweise steuern kann, sind Defekte bei dieser internen Datenübertragung vorteilhafterweise besser diagnostizierbar.

Insbesondere ist vorgesehen, dass die Steuergeräteeinheit der an das Batteriesystem angeschlossene Kommunikationsschnittstelle ausgebildet ist, eine außerhalb der Datenübertragung zwischen dem Batteriesystem und der wenigstens einen weiteren Einrichtung erfolgende Datenübertragung des Batteriesystems zumindest teilweise zu unterdrücken. Insbesondere ist dabei vorgesehen, dass eine Datenübertragung zwischen dem Batteriemanagementsystem und einer weiteren Steuergeräteeinheit, insbesondere einer Fahrzeugsteuergeräteeinheit, gestoppt wird, um eine durchzuführende Diagnose des Batteriesystems nicht zu stören. Hierdurch werden vorteilhafterweise potentielle Fehlerquellen weiter reduziert.

Darüber hinaus ist insbesondere vorgesehen, dass eine Übertragung von Daten von der Battery Control Unit an die Batteriezellen und/oder von den Batteriezellen an die Battery Control Unit zumindest teilweise unterdrückt wird, um festzustellen, ob die Steuerung und/oder Regelung des Batteriesystems ordnungsgemäß funktioniert. Insbesondere ist durch die erfindungsgemäße Kommunikationsschnittstelle ermöglicht, dass bei einer zumindest teilweise unterdrückten durch das Batteriemanagementsystem erfolgenden Datenübertragung, also einer zumindest teilweise unterdrückten Datenübertragung, die nicht zwischen dem Batteriesystem und der externen Diagnoseeinrichtung erfolgt, über die erfindungsgemäße Kommunikationsschnittstelle simulierte Steuerbefehle an Komponenten des Batteriesystems übertragen werden können. Mit diesen simulierten Steuerbefehlen lassen sich dabei vorteilhafterweise unterschiedliche Betriebsszenarien simulieren, sodass weiter verbessert feststellbar ist, ob die entsprechenden Komponenten ordnungsgemäß funktionieren.

Eine weitere vorteilhafte Ausgestaltung der Erfindung sieht vor, dass die Kommunikationsschnittstelle eine Sicherheitseinheit umfasst, wobei die Sicherheitseinheit ausgebildet ist, leitungsgebunden empfangene Daten vor einer Übertragung an die wenigstens eine weitere Einrichtung zu verschlüsseln und/oder drahtlos empfangene verschlüsselte Daten vor einer Übertragung an das Batteriesystem zu entschlüsseln. Durch diese Verschlüsselung ist vorteilhafterweise unautorisierten Personen der Zugriff auf die zwischen der erfindungsgemäßen Kommunikationsschnittstelle und einer weiteren Einrichtung übertragenen Daten verwehrt. Darüber hinaus ist vorteilhafterweise insbesondere eine Manipulation von entsprechenden Daten erschwert. Hierdurch ist vorteilhafterweise eine weitere potentielle Fehlerquelle ausgeschaltet.

Vorteilhafterweise umfasst die Kommunikationsschnittstelle eine programmierbare Speichereinheit. Die Speichereinheit kann insbesondere als Flash-Speicher realisiert sein. Die Speichereinheit kann insbesondere Bestandteil einer Mikrocontrollerschaltung oder eines ASIC (ASIC: Application Specific Integrated Circuit; dt. anwendungsspezifische integrierte Schaltung) sein.

Insbesondere ist vorgesehen, dass die Speichereinheit eine seitens der Kommunikationsschnittstelle ausführbare Testroutine umfasst, wobei vorteilhafterweise mittels der Testroutine zumindest teilweise automatisiert Parameter und/oder Funktionalitäten des Batteriesystems abfragbar sind, wenn die Kommunikationsschnittstelle an den Datenübertragungsanschluss des Batteriesystems angeschlossen ist. Dabei ist insbesondere vorgesehen, dass die Testroutine Anweisungen umfasst, wie "Lese den Fehlerspeicher des Batteriesystems aus" oder "Sende vorgegebene Daten hinsichtlich einer Batteriezelltemperatur und/oder einer Batteriezellspannung und/oder hinsichtlich eines weiteren Batteriezellparameters an das Batteriemanagementsystem". Mittels der der Anweisung "Sende vorgegebene Daten hinsichtlich einer Batteriezelltemperatur und/oder einer Batteriezellspannung und/oder hinsichtlich eines weiteren Batteriezellparameters an das Batteriemanagementsystem" lässt sich vorteilhafterweise eine Simulation von Betriebsbedingungen durchführen und somit vorteilhafterweise überprüfen, ob das Batteriemanagementsystem die an dieses gesendete simulierten Daten korrekt erfasst und auswertet. Beispielsweise ist hierdurch überprüfbar, ob bei an das Batteriemanagementsystem gesendeten erhöhten Werten hinsichtlich der Batteriezelltemperaturen die Kühlleistung des Kühlsystems, wie vorgesehen, gesteigert wird.

Gemäß einer weiteren vorteilhaften Ausgestaltung der Erfindung ist die Kommunikationsschnittstelle ausgebildet, das Anbinden des Anschlusselementes an den Datenübertragungsanschluss zu erkennen und/oder nach dem Anschließen des Anschlusselementes an den Datenübertragungsanschluss selbständig eine Konfiguration zur Ermöglichung der Übertragung von Daten zwischen dem Batteriesystem und der wenigstens einen weiteren Einrichtung durchzuführen. Die Kommunikationsschnittstelle weist somit vorteilhafterweise eine sogenannte "Plug-and-Play"-Funktionalität auf. Dabei ist insbesondere vorgesehen, dass die Kommunikationsschnittstelle ausgebildet ist, eine seitens des Batteriesystems bereitgestellte Kennung auszulesen, um eine Datenübertragung zwischen den Batteriesystemen und der wenigstens einen weiteren Einrichtung, insbesondere einem Diagnosegerät, ohne weitere durch ein Wartungspersonal durchzuführende Konfiguration zu ermöglichen. Darüber hinaus ist vorteilhafterweise das Batteriesystem beziehungsweise das Batteriemanagementsystem des Batteriesystems ausgebildet, beim Anschließen einer erfindungsgemäßen Kommunikationsschnittstelle an das Batteriesystem der Kommunikationsschnittstelle eine Priorität bei der Übertragung von Daten gegenüber anderen Sende-Empfangs-Einheiten des Batteriesystems einzuräumen.

Insbesondere ist vorgesehen, dass die erfindungsgemäße Kommunikationsschnittstelle für eine drahtlose Kommunikation nach einem Funkübertragungsstandard, vorzugsweise für eine drahtlose Kommunikation gemäß W-LAN, ausgebildet ist. Zur Übertragung von Daten zwischen dem Batteriesystem und der wenigstens einen weiteren Einrichtung über die Kommunikationsschnittstelle ist insbesondere vorgesehen, dass die Kommunikationsschnittstelle wenigstens ein im Stand der Technik bekanntes Übertragungsprotokoll unterstützt, insbesondere ein Übertragungsprotokoll gemäß Ethernet, Wireless USB oder Bluetooth.

Eine weitere bevorzugte Ausgestaltung der erfindungsgemäßen Kommunikationsschnittstelle sieht vor, dass das Anschlusselement der Kommunikationsschnittstelle als Teil eines Steckkontaktes ausgebildet ist. Dabei ist insbesondere vorgesehen, dass der Datenübertragungsanschluss des Batteriesystems und das Anschlusselement der Kommunikationsschnittstelle zusammen als Steckverbindung realisiert sind. Insbesondere ist dabei vorgesehen, dass der Datenübertragungsanschluss des Batteriesystems als Steckerbuchse und das Anschlusselement der Kommunikationsschnittstelle als korrespondierender Stecker ausgebildet ist. Hierdurch ist vorteilhafterweise das Anschließen der erfindungsgemäßen Kommunikationsschnittstelle an ein Batteriesystem besonders einfach ermöglicht. Die Kommunikationsschnittstelle ist dabei vorteilhafterweise ein Adapter, welcher eine drahtlose Datenübertragung zwischen einem Batteriesystem und einer weiteren Einrichtung, insbesondere einem externen Diagnosegerät, ermöglicht.

Gemäß einer weiteren besonders bevorzugten Ausgestaltung der erfindungsgemäßen Kommunikationsschnittstelle umfasst die Kommunikationsschnittstelle ein Gehäuse, welches die Kommunikationsschnittstelle umgibt, wobei das Anschlusselement der Kommunikationsschnittstelle von außen zugänglich an dem Gehäuse angeordnet ist. Das Gehäuse schützt dabei die Kommunikationsschnittstelle vorteilhafterweise vor äußeren Einflüssen, insbesondere vor Feuchtigkeit oder mechanischen Belastungen, wie Stößen.

Weitere vorteilhafte Einzelheiten, Merkmale und Ausgestaltungsdetails werden im Zusammenhang mit dem in der Zeichnung dargestellten Ausführungsbeispiel näher erläutert. Dabei zeigt:

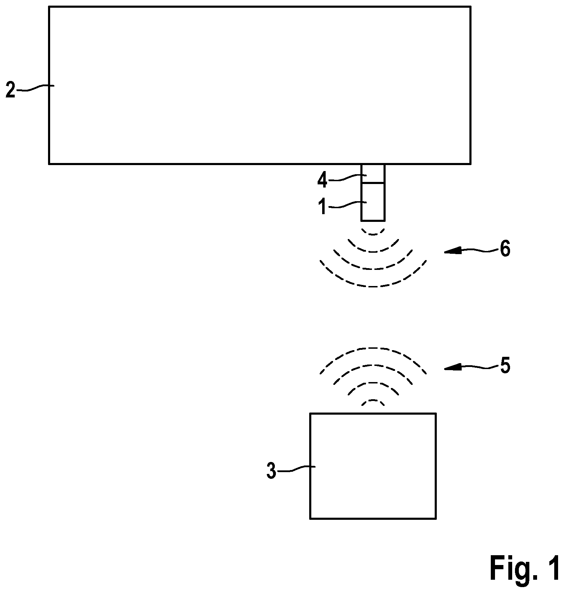

- Fig. 1: in einer schematischen Darstellung ein Ausführungsbeispiel für eine drahtlose Übertragung von Daten zwischen einem Batteriesystem und einer weiteren Einrichtung unter Nutzung einer erfindungsgemäßen Kommunikationsschnittstelle.

In Fig. 1 ist in einer stark vereinfachten Darstellung ein Batteriesystem 2 und ein Diagnosegerät 3 dargestellt. Insbesondere ist vorgesehen, dass das Batteriesystem 2 eine Mehrzahl von nachladbaren Lithium-Ionen-Zellen (in Fig. 1 nicht explizit dargestellt) umfasst, welche elektrisch miteinander verschaltet sind. Darüber hinaus umfasst das Batteriesystem 2 ein Batteriemanagementsystem (in Fig. 1 nicht explizit dargestellt) zur Überwachung und Regelung der miteinander verschalteten Batteriezellen. Das Batteriesystem 2 weist darüber hinaus einen als Steckerbuchse ausgebildeten Datenübertragungsanschluss 4 auf.

An den Datenübertragungsanschluss 4 ist in dem dargestellten Ausführungsbeispiel eine vorteilhafte Ausgestaltungsvariante einer erfindungsgemäßen Kommunikationsschnittstelle 1 angeschlossen. Die Kommunikationsschnittstelle 1 weist dabei ein Anschlusselement (in Fig. 1 nicht explizit dargestellt) auf, welches vorliegend als Stecker ausgebildet ist, wobei der Stecker korrespondierend der Buchse des Datenübertragungsanschlusses 4 ausgebildet ist. Die Steckverbindung zwischen dem Datenübertragungsanschluss 4 und der Kommunikationsschnittstelle 1 ist vorteilhafterweise durch einfaches Abziehen der Kommunikationsschnittstelle 1 von dem Datenübertragungsanschluss 4 lösbar.

Die Kommunikationsschnittstelle 1 ermöglicht vorteilhafterweise eine drahtlose Übertragung von Daten zwischen dem Batteriesystem 2 und dem Diagnosegerät 3. Insbesondere ist vorgesehen, dass die Kommunikationsschnittstelle 1 eine W-LAN-Schnittstelle ist, welche eine Funkübertragung zwischen dem Batteriesystem 2 und dem Diagnosegerät 3 ermöglicht. Insbesondere ist die Kommunikationsschnittstelle 1 ausgebildet, von dem Batteriesystem 2 leitungsgebunden über den Datenübertragungsanschluss 4 bereit gestellte beziehungsweise übertragene Daten zu empfangen und diese Daten drahtlos an das Diagnosegerät 3 zu übertragen. Die drahtlose Übertragung dieser Daten ist dabei in Fig. 1 durch die schematisch dargestellten Funkwellen 6 symbolisiert.

Darüber hinaus ist die Kommunikationsschnittstelle 1 insbesondere ausgebildet, von dem Diagnosegerät 3 drahtlos gesendete Daten (in Fig. 1 durch die schematisch dargestellten Funkwellen 5 symbolisiert), zu empfangen und diese empfangenen Daten leitungsgebunden über den Datenübertragungsanschluss 4 des Batteriesystems 2 an das Batteriesystem zu übertragen. Von dem Batteriesystem 2 mittels der Kommunikationsschnittstelle 1 an das Diagnosegerät 3 übertragene Daten sind dabei insbesondere Betriebsparameter, wie insbesondere der Ladezustand der Batteriezellen des Batteriesystems 2, Batteriezellspannungen der Batteriezellen des Batteriesystems 2, Batteriezelltemperaturen der Batteriezellen des Batteriesystems 2 und/oder dergleichen Batteriesystemparameter. Von dem Diagnosegerät 3 übertragene Daten können insbesondere Anweisungen zur Übertragung oben genannter Batteriesystemparameter sein. Darüber hinaus können von dem Diagnosegerät 3 mittels der Kommunikationsschnittstelle 1 an das Batteriesystem 2 übertragene Daten insbesondere Daten zum Testen des Batteriesystems 2 beziehungsweise von Komponenten des Batteriesystems 2, insbesondere zum Testen des Batteriemanagementsystems, sein.

Hierzu ist insbesondere vorgesehen, dass die Kommunikationsschnittstelle 1 eine Steuergeräteeinheit (in Fig. 1 nicht explizit dargestellt), vorzugsweise eine Mikrocontrollerschaltung, zusammen mit einer Speichereinheit (in Fig. 1 nicht explizit dargestellt), vorzugsweise mit einem Flash-Speicher, umfasst. Die Steuergeräteeinheit ist dabei vorteilhafterweise ausgebildet, insbesondere eine interne Datenübertragung des Batteriesystems 2 insbesondere zwischen Batteriezellen und dem Batteriemanagementsystem des Batteriesystems 2 gezielt zu unterdrücken. Darüber hinaus ist insbesondere vorgesehen, dass eine Übertragung von Daten von dem Batteriesystem 2 an eine weitere Steuergeräteeinheit, insbesondere an eine Fahrzeugsteuergeräteeinheit, wie beispielsweise die sogenannte Vehicle Control Unit (VCU), durch die Kommunikationsschnittstelle 1 unterbunden wird.

Durch diese durch die Kommunikationsschnittstelle 1 erzielte Unterdrückung einer Datenübertragung, insbesondere durch eine Unterdrückung der Steuerung der Batteriezellen des Batteriesystems 2 durch das Batteriemanagementsystem des Batteriesystems 2 ist vorteilhafterweise eine Diagnose hinsichtlich der Funktionsfähigkeit von Batteriezellen des Batteriesystems 2 und/oder der Funktionsfähigkeit weiterer Komponenten des Batteriesystems 2 verbessert, da die Diagnose unbeeinflusst von einer weiteren Kommunikation innerhalb des Batteriesystems 2 erfolgen kann und ein gezieltes Testen von Komponenten des Batteriesystems 2 durch Simulationen ermöglicht ist.

Die Übertragung von Daten zwischen dem Batteriesystem 2 und dem Diagnosegerät 3 über die Kommunikationsschnittstelle 1 erfolgt vorteilhafterweise verschlüsselt. Die Kommunikationsschnittstelle 1 umfasst dabei zur Verschlüsselung von von dem Batteriesystem 2 an das Diagnosegerät 3 zu übertragenen Daten eine Sicherheitseinheit (in Fig. 1 nicht explizit dargestellt), welche vorzugsweise Bestandteil der Mikrocontrollerschaltung der Kommunikationsschnittstelle 1 ist. Mittels der Sicherheitseinheit werden die zu übertragenen Daten dabei verschlüsselt und die verschlüsselten Daten dann an das Diagnosegerät 3 übertragen. Von dem Diagnosegerät 3 an die Kommunikationsschnittstelle 1 übertragene Daten werden dabei vorteilhafterweise von der Sicherheitseinheit entschlüsselt und die entschlüsselten Daten dann an das Batteriesystem 2 weitergeleitet.

Eine Speichereinheit (in Fig. 1 nicht explizit dargestellt) der Kommunikationsschnittstelle 1 weist vorteilhafterweise Informationen hinsichtlich unterschiedlicher Batteriesysteme auf, wobei beim Einstecken der Kommunikationsschnittstelle 1 in den Datenübertragungsanschluss 4 eines Batteriesystems 2 eine Information hinsichtlich des jeweiligen Batteriesystems 2 an die Kommunikationsschnittstelle 1 übertragen wird. Unter Nutzung dieser Informationen konfiguriert sich die Kommunikationsschnittstelle 1 dabei vorteilhafterweise selbständig für eine Übertragung von Daten zwischen den Batteriesystemen 2 und dem Diagnosegerät 3.

Vorteilhafterweise umfasst die Kommunikationsschnittstelle 1 in einer weiteren Speichereinheit (in Fig. 1 nicht explizit dargestellt) eine Testroutine, welche automatisch nach dem Einstecken in den Datenübertragungsanschluss 4 eines Batteriesystems 2 gestartet wird. Mittels der Testroutine werden dabei vorteilhafterweise automatisiert bestimmte Batteriesystemparameter des Batteriesystems 2 abgefragt, welche dann von dem Batteriesystem 2 an die Kommunikationsschnittstelle 1 übertragen werden und dann von der Kommunikationsschnittstelle 1 an das Diagnosegerät 3 übertragen werden. Insbesondere kann vorgesehen sein, dass die Testroutine Daten umfasst, mittels welcher die Funktionsfähigkeit von einzelnen Komponenten des Batteriesystems 2 überprüfbar ist, insbesondere die Funktionsfähigkeit des Batteriemanagementsystems, wobei vorteilhafterweise während des Ausführens der Testroutine eine interne Übertragung von Daten innerhalb des Batteriesystems 2 mit Mitteln der Kommunikationsschnittstelle 1 zumindest teilweise unterdrückt wird und zwar derart, dass der entsprechende Test beziehungsweise die entsprechende Simulation nicht durch eine interne Datenübertragung fehlerhaft beeinflusst werden kann.

Vorteilhafterweise kann mittels der Kommunikationsschnittstelle 1 direkt ohne den Umweg über eine zentrale Steuergeräteeinheit eines Fahrzeugs zwischen dem Batteriesystem 2 und dem Diagnosegerät 3 eine Übertragung von Daten erfolgen. Die Kommunikationsschnittstelle 1 ist dabei vorteilhafterweise wie ein Adapter nutzbar. Vorteilhafterweise muss hierbei keine Rücksicht auf Meldung von anderen Fahrzeugkomponenten genommen werden. Hierdurch ist vorteilhafterweise die Übermittlungsrate von Daten zwischen dem Batteriesystem 2 und dem Diagnosegerät 3 erhöht. Ein Wartungspersonal, welches das Diagnosegeräte 3 sowie die Kommunikationsschnittstelle 1 nutzt, kann vorteilhafterweise aus einer sicheren Entfernung die Zustandsdaten des Batteriesystems 2, insbesondere Fehlermeldungen oder Daten hinsichtlich weiterer Batteriesystemparameter oder Batteriesystemeigenschaften, wie insbesondere den Ladezustand der Batteriezellen des Batteriesystems 2, auslesen. Mittels dieser Daten ist es vorteilhafterweise möglich, den Zustand des Batteriesystems 2 zu beurteilen, vorteilhafterweise ohne dass das Wartungspersonal unmittelbaren Gefahren durch das Batteriesystem 2 ausgesetzt ist. Dies ist insbesondere bei beschädigten Batteriesystemen, insbesondere nach einem Fahrzeugunfall, besonders vorteilhaft. Insbesondere ist vorgesehen, dass über das Diagnosegerät 3 steuernd in das Batteriesystem 2 eingegriffen werden kann. Insbesondere dann, wenn das Batteriesystem 2 und/oder das Batteriemanagementsystem des Batteriesystems 2 beschädigt ist, ist hierdurch vorteilhafterweise das Batteriesystem 2 über das Diagnosegerät 3 in einen sicheren Zustand versetzbar, indem beispielsweise ein Entladen der Batteriezellen des Batteriesystems 2 initiiert wird.

Das in Fig. 1 dargestellte und im Zusammenhang mit Fig. 1 erläuterte Ausführungsbeispiel dient der Erläuterung der Erfindung und ist für diese nicht beschränkend.

## Patentansprüche

1. Kommunikationsschnittstelle (1) zur Ermöglichung einer drahtlosen Übertragung von Daten zwischen einem Batteriesystem (2) und wenigstens einer weiteren Einrichtung (3), wobei die Kommunikationsschnittstelle (1) ein Anschlusselement umfasst, über welches die Kommunikationsschnittstelle (1) lösbar mit einem Datenübertragungsanschluss (4) eines Batteriesystems (2) verbindbar ist, wobei die an den Datenübertragungsanschluss (4) angeschlossene Kommunikationsschnittstelle (1) ausgebildet ist, von dem Batteriesystem (2) leitungsgebunden über den Datenübertragungsanschluss (4) übertragene Daten zu empfangen und diese Daten drahtlos an die wenigstens eine weitere Einrichtung (3) zu übertragen sowie von der wenigstens einen weiteren Einrichtung (3) drahtlos übertragene Daten zu empfangen und diese leitungsgebunden über den Datenübertragungsanschluss (4) an das Batteriesystem (2) zu übertragen, wobei die Kommunikationsschnittstelle (1) eine Steuergeräteeinheit umfasst, **dadurch gekennzeichnet, dass** die Steuergeräteeinheit ausgebildet ist, die Datenübertragung des Batteriesystems (2) zumindest teilweise zu steuern, wenn die Kommunikationsschnittstelle (1) an den Datenübertragungsanschluss (4) des Batteriesystems (2) angeschlossen ist, wobei eine batteriesysteminterne Kommunikation zwischen einem Batteriemanagentsystem und den Batteriezellen des Batteriesystems (2) gesteuert werden kann.

2. Kommunikationsschnittstelle (1) nach Anspruch 1, **dadurch gekennzeichnet, dass** die Steuergeräteeinheit der an das Batteriesystem (2) angeschlossenen Kommunikationsschnittstelle (1) ausgebildet ist, eine außerhalb der Datenübertragung zwischen dem Batteriesystem (2) und der wenigstens einen weiteren Einrichtung (3) erfolgende Datenübertragung des Batteriesystems (2) zumindest teilweise zu unterdrücken.

3. Kommunikationsschnittstelle (1) nach einem der vorhergehenden Ansprüche, **dadurch gekennzeichnet, dass** die Kommunikationsschnittstelle (1) eine Sicherheitseinheit umfasst, wobei die Sicherheitseinheit ausgebildet ist, leitungsgebunden empfangene Daten vor einer Übertragung an die wenigstens eine weitere Einrichtung (3) zu verschlüsseln und/oder drahtlos empfangene verschlüsselte Daten vor einer Übertragung an das Batteriesystem (2) zu entschlüsseln.

4. Kommunikationsschnittstelle (1) nach einem der vorhergehenden Ansprüche, **dadurch gekennzeichnet, dass** die Kommunikationsschnittstelle (1) eine programmierbare Speichereinheit umfasst.

5. Kommunikationsschnittstelle (1) nach Anspruch 4, **dadurch gekennzeichnet, dass** die Speichereinheit eine seitens der Kommunikationsschnittstelle (1) ausführbare Testroutine umfasst, wobei mittels der Testroutine zumindest teilweise automatisiert Parameter und/oder Funktionalitäten des Batteriesystems (2) abfragbar sind, wenn die Kommunikationsschnittstelle (1) an den Datenübertragungsanschluss (4) des Batteriesystems (2) angeschlossen ist.

6. Kommunikationsschnittstelle (1) nach einem der vorhergehenden Ansprüche, **dadurch gekennzeichnet, dass** die Kommunikationsschnittstelle (1) ausgebildet ist, das Anbinden des Anschlusselementes an den Datenübertragungsanschluss (4) zu erkennen und/oder nach dem Anschließen des Anschlusselementes an den Datenübertragungsanschluss (4) selbständig eine Konfiguration zur Ermöglichung der Übertragung von Daten zwischen dem Batteriesystem (2) und der wenigstens einen weiteren Einrichtung (3) durchzuführen.

7. Kommunikationsschnittstelle (1) nach einem der vorhergehenden Ansprüche, **dadurch gekennzeichnet, dass** die Kommunikationsschnittstelle (1) für eine drahtlose Kommunikation nach einem Funkübertragungsstandard ausgebildet ist.

8. Kommunikationsschnittstelle (1) nach einem der vorhergehenden Ansprüche, **dadurch gekennzeichnet, dass** das Anschlusselement als Teil eines Steckkontaktes ausgebildet ist.

9. Kommunikationsschnittstelle (1) nach einem der vorhergehenden Ansprüche, **dadurch gekennzeichnet, dass** die Kommunikationsschnittstelle (1) ein Gehäuse umfasst, welches die Kommunikationsschnittstelle (i) umgibt, wobei das Anschlusselement von außen zugänglich an dem Gehäuse angeordnet ist.

## Claims

1. Communication interface (1) for making it possible to wirelessly transmit data between a battery system (2) and at least one further device (3), wherein the communication interface (1) comprises a connection element which can be used to releasably connect the communication interface (1) to a data transmission connection (4) of a battery system (2), wherein the communication interface (1) connected to the data transmission connection (4) is designed to receive data transmitted by the battery system (2) in a wired manner via the data transmission connection (4) and to wirelessly transmit these data to the at least one further device (3) and to receive data wirelessly transmitted by the at least one further device (3) and to transmit these data to the battery system (2) in a wired manner via the data transmission connection (4), wherein the communication interface (1) comprises a control device unit, **characterized in that** the control device unit is designed to at least partially control the data transmission of the battery system (2) if the communication interface (1) is connected to the data transmission connection (4) of the battery system (2), wherein communication inside the battery system between a battery management system and the battery cells of the battery system (2) can be controlled.

2. Communication interface (1) according to Claim 1, **characterized in that** the control device unit of the communication interface (1) connected to the battery system (2) is designed to at least partially suppress data transmission of the battery system (2) which takes place outside the data transmission between the battery system (2) and the at least one further device (3).

3. Communication interface (1) according to one of the preceding claims, **characterized in that** the communication interface (1) comprises a security unit, wherein the security unit is designed to encrypt data received in a wired manner before transmission to the at least one further device (3) and/or to decrypt wirelessly received encrypted data before transmission to the battery system (2).

4. Communication interface (1) according to one of the preceding claims, **characterized in that** the communication interface (1) comprises a programmable storage unit.

5. Communication interface (1) according to Claim 4, **characterized in that** the storage unit comprises a test routine which can be executed by the communication interface (1), wherein parameters and/or functionalities of the battery system (2) can be queried in an at least partially automated manner by means of the test routine if the communication interface (1) is connected to the data transmission connection (4) of the battery system (2).

6. Communication interface (1) according to one of the preceding claims, **characterized in that** the communication interface (1) is designed to detect the connection of the connection element to the data transmission connection (4) and/or to independently carry out a configuration, after the connection element has been connected to the data transmission connection (4), in order to make it possible to transmit data between the battery system (2) and the at least one further device (3).

7. Communication interface (1) according to one of the preceding claims, **characterized in that** the communication interface (1) is designed for wireless communication according to a radio transmission standard.

8. Communication interface (1) according to one of the preceding claims, **characterized in that** the connection element is designed as part of a plug contact.

9. Communication interface (1) according to one of the preceding claims, **characterized in that** the communication interface (1) comprises a housing which surrounds the communication interface (1), wherein the connection element is arranged on the housing in a manner accessible from the outside.

## Revendications

1. Interface de communication (1) destinée à permettre la transmission sans fil de données entre un système de batteries (2) et au moins un autre dispositif (3), dans laquelle l'interface de communication (1) comprend un élément de raccord, par lequel l'interface de communication (1) peut être connectée de façon séparable à un raccord de transmission de données (4) d'un système de batteries (2), dans laquelle l'interface de communication (1) connectée au raccord de transmission de données (4) est configurée pour recevoir des données transmises du système de batteries (2) par des lignes via le raccord de transmission de données (4) et pour transmettre ces données sans fil audit au moins un autre dispositif (3) ainsi que pour recevoir des données transmises sans fil dudit au moins un autre dispositif (3) et pour transmettre ces données par des lignes via le raccord de transmission de données (4) au système de batteries (2), dans laquelle l'interface de communication (1) comprend une unité d'appareil de commande, **caractérisée en ce que** l'unité d'appareil de commande est configurée pour commander au moins en partie la transmission de données du système de batteries (2), lorsque l'interface de communication (1) est connectée au raccord de transmission de données (4) du système de batteries (2), dans laquelle une communication interne du système de batteries entre un système de gestion de batteries et les cellules de batterie du système de batteries (2) peut être commandée.

2. Interface de communication (1) selon la revendication 1, **caractérisée en ce que** l'unité d'appareil de commande de l'interface de communication (1) connectée au système de batteries (2) est configurée pour supprimer au moins en partie une transmission de données du système de batteries (2) se produisant en dehors de la transmission de données entre le système de batteries (2) et ledit au moins un autre dispositif (3).

3. Interface de communication (1) selon l'une quelconque des revendications précédentes, **caractérisée en ce que** l'interface de communication (1) comprend une unité de sécurité, dans laquelle l'unité de sécurité est configurée pour crypter des données reçues par des lignes avant une transmission audit au moins un autre dispositif (3) et/ou pour décrypter des données cryptées reçues sans fil avant une transmission au système de batteries (2).

4. Interface de communication (1) selon l'une quelconque des revendications précédentes, **caractérisée en ce que** l'interface de communication (1) comprend une unité de mémoire programmable.

5. Interface de communication (1) selon la revendication 4, **caractérisée en ce que** l'unité de mémoire comprend une routine d'essai exécutable par l'interface de communication (1), dans laquelle des paramètres et/ou des fonctionnalités du système de batteries (2) peuvent être interrogés/interrogées de façon au moins partiellement automatisée au moyen de la routine d'essai, lorsque l'interface de communication (1) est connectée au raccord de transmission de données (4) du système de batteries (2).

6. Interface de communication (1) selon l'une quelconque des revendications précédentes, **caractérisée en ce que** l'interface de communication (1) est configurée pour détecter la connexion de l'élément de raccord au raccord de transmission de données (4) et/ou pour exécuter, après la connexion de l'élément de raccord au raccord de transmission de données (4), automatiquement une configuration destinée à permettre la transmission de données entre le système de batteries (2) et ledit au moins un autre dispositif (3).

7. Interface de communication (1) selon l'une quelconque des revendications précédentes, **caractérisée en ce que** l'interface de communication (1) est configurée pour une communication sans fil selon une norme de transmission par radio.

8. Interface de communication (1) selon l'une quelconque des revendications précédentes, **caractérisée en ce que** l'élément de raccord fait partie d'un contact à broche.

9. Interface de communication (1) selon l'une quelconque des revendications précédentes, **caractérisée en ce que** l'interface de communication (1) comprend un boîtier, qui entoure l'interface de communication (1), dans laquelle l'élément de raccord est disposé de façon accessible de l'extérieur sur le boîtier.
